Europäisches Patentamt

European Patent Office

Office européen des brevets

(19)

(11) Publication number: **0 450 612 B1**

# EUROPEAN PATENT SPECIFICATION

(45) Date of publication of patent specification: **14.12.94**  (51) Int. Cl.5: **B29C 71/02**, B29C 71/04

(21) Application number: **91105306.4**

(22) Date of filing: **04.04.91**

(54) **Process for producing resin molded article having diminished residual stress.**

(30) Priority: **04.04.90 JP 88179/90**

(43) Date of publication of application:
**09.10.91 Bulletin 91/41**

(45) Publication of the grant of the patent:
**14.12.94 Bulletin 94/50**

(84) Designated Contracting States:
**DE GB**

(56) References cited:
**EP-A- 0 145 864**
**DE-A- 1 629 508**
**DE-A- 2 038 794**
**US-A- 4 128 379**

**PATENT ABSTRACTS OF JAPAN vol. 010, no.
184 (E-415) June 27, 1986 & JP-A-61 32 419
(MITSUBISHI ELECTRIC CORP. ) February 15,
1986**

**US-I- T909 018**

(73) Proprietor: **MITSUBISHI GAS CHEMICAL COM-
PANY, INC.**
**No. 5-2, Marunouchi 2-chome
Chiyoda-ku, Tokyo (JP)**

(72) Inventor: **Iwakiri, Tsuneaki, c/o Mitsubishi Gas
Chem.Co.Inc.**
**6-2, Higashiyahata 5-chome
Hiratsuka-shi, Kanagawa (JP)**
Inventor: **Izumida, Toshiaki, c/o Mitsubishi
Gas Chem.Co.Inc.**
**6-2, Higashiyahata 5-chome
Hiratsuka-shi, Kanagawa (JP)**
Inventor: **Iwaki, Masanori, c/o Mitsubishi Gas
Chem.Co.Inc.**
**6-2, Higashiyahata 5-chome
Hiratsuka-shi, Kanagawa (JP)**
Inventor: **Sadano, Chikara, c/o Mitsubishi Gas
Chem.Co.Inc.**
**6-2, Higashiyahata 5-chome
Hiratsuka-shi, Kanagawa (JP)**

(74) Representative: **Hansen, Bernd, Dr.
Dipl.-Chem. et al
Hoffmann, Eitle & Partner
Patent- und Rechtsanwälte,
Postfach 81 04 20
D-81904 München (DE)**

**Description**

FIELD OF THE INVENTION

The present invention relates to a process for producing a resin molded article. More particularly, it relates to a process for producing a molded article having a diminished residual stress, in which a thermoplastic resin molded article is heated by means of a combination of far infrared heating and hot-air heating or heat insulation to diminish the residual stress of the molded article. Compared with conventional hot-air heating treatment, the process of the present invention can reduce residual stress (residual strain) in a shorter period of time and is extremely effective in reduction of production cost, etc.

BACKGROUND OF THE INVENTION

In the production of automotive lamp lenses, particularly head lamp lenses, acrylic resins such as polymethyl methacrylate (PMMA), and acrylic-styrene resins (AS) have conventionally been used. In recent years, however, polycarbonate resins having high mechanical strength and heat resistance have come to arise attention and are practically used for the above use.

However, polycarbonate resins alone have problems concerning weatherability and mar resistance. Although a secondary processing to form a coating having good weatherability and mar resistance is mainly conducted to overcome those problems, this coating treatment necessitates a residual stress-reducing step, in which molded articles to be coated are heated with hot air to remove molding strain in order to prevent blushing and cracking during the formation of the coating and also to prevent cracking due to long-term fatigue, and a cleaning and drying step for imparting good adhesion and appearance to the coating. In the residual stress-reducing step of those steps, a hot-air drying oven is used for hot-air heating, but use of the hot-air drying oven has been disadvantageous in that residual stress reduction takes much time, resulting in increased production cost, limited treating capacity, etc.

DE-A-20 38 794 refers to a method for molding and setting shoes by heat treating shaped poromeric components of the shoe and forced cooling in a short period of time while the components are still at a temperature of 100°C or more. Thereby, the material is heated by radiant heating at a maximum temperature of 130-160°C for 3-4 min. (first zone) and with hot gas at 80-150°C for 3-5 min. (second zone).

US-I-T909018 refers to a method for the heat-setting treatment of synthetic filaments. Thereby, the filaments are arranged in a parallel manner and are advanced under a predetermined tension through a processing chamber wherein the filaments are subjected to infrared rays. The filaments also may be subjected to a contact heating operation upstream and/or downstream of the infrared ray processing chamber.

SUMMARY OF THE INVENTION

An object of the present invention is to provide a process for diminishing the residual stress (residual strain) of a thermoplastic resin molded article in a short period of time, which process can, therefore, increase the production efficiency of thermoplastic resin molded articles having a diminished residual stress and produce such molded articles at a low production cost.

Another object of the present invention is to provide a process for effectively diminishing the residual stress of a molded article having a large thickness.

Still another object of the present invention is to provide a process for effectively diminishing the residual stress of a molded article obtained from a thermoplastic resin which tends to have a residual strain through injection molding.

A further object of the present invention is to provide a process for effectively diminishing the residual stress of a thermoplastic resin molded article for use as an automotive lamp lens.

The process for producing a resin molded article having a diminished residual stress in accordance with the present invention comprises heating a molded article of a thermoplastic resin by means of a simultaneous combination of heating with far infrared ray having a frequency of from $10^{11}$ to $10^{14}$ Hz and hot-air heating at a temperature 10 to 50°C lower than the low-load heat distortion temperature of the thermoplastic resin, thereby to diminish a residual stress in the molded article in a short period of time.

2

DETAILED DESCRIPTION OF THE INVENTION

The molded article to be treated in the present invention is not particularly limited as long as it is made of a thermoplastic resin, and a thermoplastic resin alone, a resin composition obtained by blending two or more thermoplastic resins, and a composition obtained by incorporating a filler, a reinforcement, etc., into such a resin or resin composition can be used. The shape of the molded article is not particularly limited, but the process of the present invention is advantageously applicable to a molded article having a large thickness which requires much time to remove a residual strain by the conventional technique.

Examples of the thermoplastic resin include poly(vinyl chloride); acrylic resins such as polymethyl methacrylate (PMMA); polystyrene resins such as polystyrene (PS) and high impact polystyrene (HIPS); copolymers of polystyrene and acrylic ester, acrylonitrile, or the like, such as acrylonitrile-butadiene-stryrene resin (ABS), acrylonitrile-acrylic-stryrene resin (AAS), methyl methacrylate-acrylate-styrene copolymer (MAS), copolymer of MAS and butadiene (MEBS), or the like; polyolefins such as polypropylene (PP), polyethylene (PE), polymethylpenten (TPX) or the like; homo- or co-polyacetal resins; crystalline or non-crystalline polyamide resins such as Nylon 6, Nylon 66, Nylon 610, Nylon 12, Nylon MXD6, or the like; crystalline, non-crystalline or liquid crystal polyester resins such as polybutylene terephthalate (PBT), polyethylene terephthalate (PET), copolymer of 1,4-cyclohexane dimethanol, ethylene glycol and terephthalic acid (PCTG), copolymer of PCTG, tsophthalic acid and terephthalic acid (PCTA), Vectra (a tradename, all aromatic-type thermoplastic polyester manufactured by Hoechst-Celanese), or the like; engineering plastics such as aromatic polycarbonates (PC), poly(phenylene ether)s (PPE), poly(phenylene sulfide) (PPS), polysulfone, and polyetheretherketones (PEEK); and the like. Those resins can be used alone or as a resin composition prepared by blending two or more thereof. Further, those resins can also be advantageously used in the form of a composition prepared by blending therewith a thermoplastic elastomer or core-shell type elastomer, as an impact modifier, selected from various kinds of elastomers or a composition prepared by blending therewith a filler or reinforcement in the form of fibers, powder, spheres, scales, plates, tetrapods, or whiskers, or in any of other various forms. Of those examples, resins to which the process of the present invention is advantageously applied include high molecular weight general-purpose resins which particularly tend to have residual strain through injection molding, general-purpose engineering plastics, engineering plastics, super-heat-resistant engineering plastics, and the like, and also include compositions obtained by blending a filler or reinforcement with those resins. Polycarbonate resins are preferred.

The production process of the present invention can, for example, be practiced in the manner such that a molded article is rapidly heated to a temperature around the annealing temperature thereof and then maintained in a far infrared heating apparatus equipped with both a far infrared heater emitting far infrared ray having a frequency of from $10^{11}$ to $10^{14}$ Hz and either a hot-air heater or a heat insulating means. The heating temperature is a temperature 10 to 50°C lower than the low-load heat distortion temperature (measured according to ASTM D 648, load: 4.55 bar (66 psi)) of the thermoplastic resin constituting the molded article. For example, the annealing temperature for a polycarbonate resin molded article is in the range of about from 120 to 135°C.

In order to more efficiently practice the process of the present invention, the heating apparatus can be provided with far infrared heaters at the upper and lower parts of the apparatus, on the left and right sides thereof, and at the front and rear parts thereof according to need, thereby attaining more uniform heating. In combination with the far infrared heating, hot-air heating or heat insulation should be used in the present invention. Due to such heating, the surface temperature of a molded article, on the surface of which residual stress tends to concentrate, can be maintained and temperature differences among parts of a three-dimensional molded article can be minimized. If an ambient temperature is low, the molded article surface is cooled, resulting in a decreased strain-removing effect, but this can be prevented by the combined use of hot-air heating or heat insulation, thereby attaining the effect of diminishing residual stress to a lower level in a shorter period of time.

Further, although there are cases where heating is retarded locally by adherent water or other factors, this can be relieved by the combined use of hot-air heating or heat insulation, thus enabling production of molded articles having residual stresses which have been diminished to a lower level in a short period of time. As a result, in the case of polycarbonate molded articles, for example, the residual strain can be removed in a period of about from 5 to 10 minutes, which period, although varying depending on the molded article shape and residual stress level, is at the most about one-second to one-fifth the conventional treating period. It is preferred in the present invention to conduct the above-described heat treatment before dust particles adhere to the molded article to be treated or the molded article absorbs moisture. For example, the treatment is conducted immediately after injection molding.

According to the present invention, residual stress can be removed within an extremely short period of time as compared with the conventional technique. Therefore, the present invention brings about a reduction in production cost, a greatly increased treating capacity, and other effects, and is hence of considerable industrial significance.

The present invention is explained below in more detail by reference to the following examples, which should not be construed to be limiting the scope of the invention.

EXAMPLE 1 AND COMPARATIVE EXAMPLE 1

Using a polycarbonate resin (trade name, lupilon S 2000; manufactured by Mitsubishi Gas Chemical Company, Inc., Japan), a rectangular plate having a size of 3 mm × 100 mm × 150 mm and a large residual stress was prepared at a high injection pressure and a high holding pressure.

This rectangular plate was heated with a far infrared and hot-air heating apparatus (01166; equipped with an infra-jet far infrared heater and a hot-air fan) manufactured by JARD Co., Ltd., Japan, and residual stress removal with the lapse of time was examined.

The results obtained are shown in Table 1 below together with the results of a comparative treatment in which heating was conducted by means of far infrared alone (Comparative Example 1).

In the above heat treatment, the temperature of the far infrared heater was regulated at 135°C, while that of the hot-air heater in the case of combined use thereof was regulated at 120°C.

Residual stress (kg/cm$^2$) was determined by an organic solvent method (using a mixed solvent of carbon tetrachloride and n-butanol).

### TABLE 1

### (Residual Stress, kg/cm$^2$)

|  | Heating Means | Treating Time (min) | | | | |
|---|---|---|---|---|---|---|
|  |  | 0 | 3 | 5 | 10 | 20 |
| Example 1 | Far infrared + hot-air heater | 190 | 78 | 55 | 36 | 36 |
| Comparative Example 1 | Far infrared alone | 190 | 150 | 150 | 150 | 150 |

The results in Table 1 show that in the case where far infrared heating and either hot-air heating with a hot-air heater or heat insulation are used in combination, heat treatment for as short as 10 minutes can reduce the residual stress to 40 kg/cm$^2$ or less, which value causes no practical problem.

It was ascertained that in the case of heating with far infrared alone (Comparative Example 1), the temperature of the inner part of the molded article did not reach 120°C and, as a result, removal of the residual stress was insufficient. It was also ascertained that in the case where hot air is used in combination with far infrared heating (Example 1), the surface temperature of the molded article rose first and the inner part was then gradually heated to the predetermined temperature.

COMPARATIVE EXAMPLE 2

The same procedures as in Example 1 were repeated except that a conventional circulating hot-air drying oven only was used.

4

The results obtained are shown in Table 2 below.

## TABLE 2

### (Residual Stress, $kg/cm^2$)

| | Treating Time (min) | | | | | |
|---|---|---|---|---|---|---|
| | 0 | 10 | 20 | 30 | 60 | 90 |
| Hot-air heater alone | 190 | 110 | 77 | 55 | 37 | 37 |

The results in Table 2 show that in the case of hot-air heating alone, heat treatment for about 60 minutes is required to reduce the residual stress to 40 $kg/cm^2$ or less, which value causes no practical problem. In the above treatment, the time required for heating the inner part of the molded article to 120°C was about 30 minutes.

EXAMPLE 2 AND COMPARATIVE EXAMPLE 3

The same procedures as in Example 1, in which far infrared heating and hot-air heating were used in combination, and the same procedures as in Comparative Example 2, in which hot-air heating alone was used, were repeated except that an injection-molded article in the form of an open rectangular box having a wall thickness of 2.5 mm, a width of 100 mm, a length of 200 mm, and a height of 75 mm was used as the molded article to be treated.

The results obtained are shown in Table 3 below.

## TABLE 3

### (Residual Stress, $kg/cm^2$)

| | Heating Means | Treating Time (min) | | | | | | |
|---|---|---|---|---|---|---|---|---|
| | | 0 | 1 | 2 | 5 | 10 | 20 | 30 |
| Example 2 | Far infrared + hot-air heater | 110 | 77 | 77 | 37 | 37 | – | – |
| Comparative Example 3 | Hot-air heater alone | 110 | 77 | 77 | 77 | 77 | 37 | 37 |

The results in Table 3 show that for reducing the residual stress to 40 $kg/cm^2$ or less, which value causes no practical problem, the heat treatment with a hot-air heater alone (Comparative Example 3) requires 20 minutes, whereas 5-minute treatment is sufficient in the case of the heat treatment employing both far infrared and a hot-air heater (Example 2).

In the above treatments, the time required for heating the molded article surface to 120°C which is effective in residual stress removal was about 15 minutes in the treatment with a hot-air heater alone (Comparative Example 3) and was 5 minutes in the treatment employing both far infrared and a hot-air heater (Example 2).

While the invention has been described in detail and with reference to specific embodiments thereof, it will be apparent to one skilled in the art that various changes and modifications can be made therein without departing from the scope thereof.

**Claims**

1. A process for producing a resin molded article having a diminished residual stress, which comprises heating an injection-molded article of a thermoplastic resin by means of a simultaneous combination of heating with far infrared ray having a frequency of from $10^{11}$ to $10^{14}$ Hz and hot-air heating at a temperature 10 to 50°C lower than the low-load heat distortion temperature of the thermoplastic resin, thereby to diminish a residual stress in the molded article in a short period of time.

2. A process as claimed in claim 1, wherein the heating of the molded article is conducted immediately after molding.

3. A process as claimed in claim 1, wherein the molded article is an article for use as an automotive lamp lens.

**Patentansprüche**

1. Verfahren zur Herstellung eines aus Harz geformten Gegenstands mit verringerter Restspannung, wobei man einen aus einem thermoplastischen Harz durch Spritzguß geformten Gegenstand mittels einer gleichzeitigen Kombination einer Erhitzung mit fernen Infrarotstrahlen mit einer Frequenz von $10^{11}$ bis $10^{14}$ Hz sowie einer Erhitzung mit Heißluft bei einer Temperatur von 10 bis 50 °C unterhalb der durch Erhitzen unter niedriger Last ermittelten Erweichungstemperatur des thermoplastischen Harzes erhitzt, um dadurch die Restspannung im Formgegenstand in einer kurzen Zeitspanne zu verringern.

2. Verfahren gemäß Anspruch 1,
   wobei der Formgegenstand sofort nach der Formgebung erhitzt wird.

3. Verfahren gemäß Anspruch 1,
   worin der Formgegenstand ein Gegenstand zur Verwendung als Automobillampenlinse ist.

**Revendications**

1. Procédé pour fabriquer un article moulé en résine ayant une tension résiduelle réduite, qui consiste à chauffer un article moulé par injection en résine thermoplastique au moyen de la combinaison simultanée d'un chauffage avec un rayon infrarouge lointain ayant une fréquence comprise entre $10^{11}$ et $10^{14}$ Hz et d'un chauffage à l'air chaud à une température inférieure de 10 à 50 °C à la température de déformation à la chaleur sous faible charge de la résine thermoplastique, d'où la diminution de la tension résiduelle dans l'article moulé dans un bref laps de temps.

2. Procédé selon la revendication 1, dans lequel le chauffage de l'article moule est effectué immédiatement après le moulage.

3. Procédé selon la revendication 1, dans lequel l'article moulé est un article destiné à être employé comme lentille d'un phare d'automobile.